# EUROPEAN PATENT SPECIFICATION

(11) **EP 3 198 714 B1**
(45) Date of publication and mention of the grant of the patent: **15.07.2020**
(21) Application number: 14902675.9
(22) Date of filing: 25.09.2014
(51) Int. Cl.: H02M 3/335, H02M 1/00

(54) **POWER SUPPLY UNIT ADAPTABLE FOR VARIOUS POWER MODES**
AN VERSCHIEDENE LEISTUNGSMODI ANPASSBARE STROMVERSORGUNGSEINHEIT
UNITÉ D'ALIMENTATION ADAPTABLE À DIVERS MODES DE PUISSANCE

(43) Date of publication of application: 02.08.2017
(73) Proprietor: Intel Corporation, Santa Clara, CA 95052 (US)
(72) Inventor: LIANG, Xiaoguo, Shanghai 200241 (CN); YE, Yinghua, Shanghai 200241 (CN); UAN-ZO-LI, Alexander B., Hillsboro, OR 97124 (US); LI, Zhiming, Shanghai 200240 (CN); GONG, Haifeng, Shanghai, 200030 (CN); HU, Xiao, Shanghai 200241 (CN); FITE, Robert J., Olympia, WA 98502 (US)
(74) Representative: HGF
(86) International application number: PCT/CN2014/087429
(87) International publication number: WO 2016/045052

(56) References cited:
- EP-A1- 0 188 646
- EP-A2- 0 772 284
- CN-A- 1 969 447
- CN-A- 101 034 854
- CN-A- 101 232 254
- CN-A- 103 119 839
- JP-A- 2001 231 260
- US-A- 5 479 087
- US-A1- 2011 051 469
- US-A1- 2013 009 568
- US-A1- 2014 062 187
- US-B1- 6 504 267
- Leo Lorenz ET AL: "Design Proposal for Low Power Drives", PCIM 2001, 20 June 2001 (2001-06-20), XP055370947, Nuremberg Retrieved from the Internet: URL:https://www.mesago.de/en/PCIM/ [retrieved on 2017-05-09]

## Description

### BACKGROUND

A server platform may operate at various power modes. For example, in Intel® Architecture (IA) based platforms, Turbo Boost Technology (also referred to as Turbo power mode) is used to provide high computing performance while still maintaining a reasonable thermal design profile. One way to provide the extra supply needed for the Turbo power mode (or any other high power mode for non-Intel based platforms) is to overdesign the power supply unit (PSU) so that the PSU can provide more power capacity.

For example, a normal PSU may supply 1200W of power and can be overdesigned to provide 1500W of power to accommodate operation during high power mode such as Turbo power mode. However, overdesigning the PSU increases the size and cost of the PSU. Another way to increase the capability of the PSU to provide more power is to add extra output capacitance to support peak power requirements of a high power mode (e.g., Turbo power mode). Increasing capacitance by using a larger capacitor increases Bill-of-Material (BOM) cost of the PSU (e.g., it may add additional $6 to the cost of the PSU). The publication "Design Proposal for Low Power Drives", published in the proceedings of the PCIM Europe in 2001, describes a motor controller with a power supply, which generates a regulated 15 V for the IGBT drivers and an unregulated 7 V, which is further stabilised by a downstream voltage regulator, for supplying the data processing circuits with 5 V. Document US 2011/051469 discloses a power supply system that is configured to use a linear regulator to form a regulated voltage during a standby mode and to use the regulated voltage to form another regulated voltage.
Document US 5479087 discloses a synchronized switched tapped coupled inductor circuit which couples a first closed-loop regulated output of a forward converter switching power supply to a second output to assist in regulating the voltage of the second output.
Document US 2014/062187 discloses a forward-based power conversion apparatus. When the forward-based power conversion apparatus supplies a plurality of (at least two of) output voltages to a load, a reverse voltage, corresponding to a lower output voltage, of a secondary winding of a transformer is captured through an equipped output auxiliary unit, so as to assist an output of a higher output voltage.
Document JP 2001/231260 discloses a multi-output switching power source composed of a negative feedback voltage control circuit which supplies voltage stably to the secondary circuit of a switching power transformer, by turning DC voltage on/off with a switching element, and a nonvoltage control circuit whose output voltage is lower than that of the circuit; a regulation diode is connected between the voltage control circuit and the nonvoltage control circuit.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
**Fig. 1** illustrates a high level system with a power supply unit (PSU) that provides regulated and unregulated power supplies, according to some embodiments of the disclosure.
**Fig. 2** illustrates a detailed level architecture of the PSU of **Fig. 1**, according to some embodiments of the disclosure.
**Fig. 3** illustrates a server rack with a plurality of servers and a power supply unit to provide regulated and unregulated power supplies, according to some embodiments of the disclosure.
**Fig. 4A** illustrates a detailed level architecture of the PSU of **Fig. 1** with an energy transfer unit, according to some embodiments of the disclosure.
**Fig. 4B** illustrates a detailed level architecture of the PSU of **Fig. 1** with an energy transfer unit and two sets of secondary side turns, according to some embodiments of the disclosure.
**Fig. 4C** illustrates an energy transfer unit, according to some embodiments of the disclosure.
**Fig. 5** illustrates a system having a PSU with an intermediate unregulated voltage bus that is used for generating regulated and unregulated power supplies, according to some embodiments of the disclosure.
**Fig. 6** illustrates a flowchart for a method for providing regulated and unregulated power supplies, according to some embodiments of the disclosure.
**Fig. 7** illustrates a smart device or a computer system or a SoC (System-on-Chip) having a PSU that provides regulated and unregulated power supplies, according to some embodiments of the disclosure.

### SUMMARY

Embodiments of the invention are set out in the appended claims.

### DETAILED DESCRIPTION

Some embodiments describe a system having a Power Supply Unit (PSU) that provides a regulated power supply from a first rectifier and an unregulated power supply from a second rectifier. In some embodiments, the unregulated power supply is used to provide a higher power supply during a high power mode (e.g., Turbo power mode) to one or more loads without affecting the regulated power supply level.

In some embodiments, the PSU includes a transformer that is coupled to a conversion unit. In some embodiments, the conversion unit is a primary conversion unit that converts an AC (Alternate Current) power supply to a DC (Direct Current) power supply. In some embodiments, this DC power supply is stepped down by the transformer. In some embodiments, the PSU comprises at least two rectifiers, each coupled to the transformer, such that one of the rectifiers receives the stepped down DC power supply and provides a regulated power supply to a first power supply node while the other rectifier also receives the stepped down DC power supply and provides an un-regulated power supply to a second power supply node.

In some embodiments, the first power supply node is coupled to one or more loads (e.g., fan, cooling units, hard disk drive, etc.) that require a regulated power supply for proper operation. In some embodiments, the second power supply node is coupled to one or more loads (e.g., processors, memories, graphics card, etc.) through voltage regulators (VRs) that may operate on a higher power supply during a high power mode (e.g., Turbo power mode).

There are many technical effects of the various embodiments. One technical effect of some embodiments is that the PSU can provide a high power supply on demand (e.g., during Turbo power mode) without compromising the power supply provided to other loads that expect a regulated power supply (i.e., voltage droop is not seen on the regulated power supply when a higher power supply is demanded on the node providing the unregulated power supply). Compared to traditional PSUs that are overdesigned to provide a higher supply (e.g., 1500W of power) to accommodate high power mode such as Turbo mode on a single power supply node, some embodiments split the power supply to two power supply paths and avoid overdesigning of the PSU which saves BOM cost.

In the following description, numerous details are discussed to provide a more thorough explanation of embodiments of the present disclosure. It will be apparent, however, to one skilled in the art, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate more constituent signal paths, and/or have arrows at one or more ends, to indicate primary information flow direction. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical connection between the things that are connected, without any intermediary devices. The term "coupled" means either a direct electrical connection between the things that are connected or an indirect connection through one or more passive or active intermediary devices. The term "circuit" means one or more passive and/or active components that are arranged to cooperate with one another to provide a desired function. The term "signal" means at least one current signal, voltage signal or data/clock signal. The meaning of "a," "an," and "the" include plural references. The meaning of "in" includes "in" and "on."

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level. The terms "substantially," "close," "approximately," "near," and "about," generally refer to being within +/- 20% of a target value.

For purposes of the embodiments, the transistors in various circuits or logic blocks are metal oxide semiconductor (MOS) transistors, which include drain, source, gate, and bulk terminals. The transistors also include Tri-Gate and FinFET transistors, Gate All Around Cylindrical Transistors, Tunneling FET (TFET), Square Wire, or Rectangular Ribbon Transistors or other devices implementing transistor functionality like carbon nano tubes or spintronic devices. MOSFET symmetrical source and drain terminals i.e., are identical terminals and are interchangeably used here. A TFET device, on the other hand, has asymmetric Source and Drain terminals. Those skilled in the art will appreciate that other transistors, for example, Bi-polar junction transistors-BJT PNP/NPN, BiCMOS, CMOS, eFET, etc., may be used without departing from the scope of the disclosure.

Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

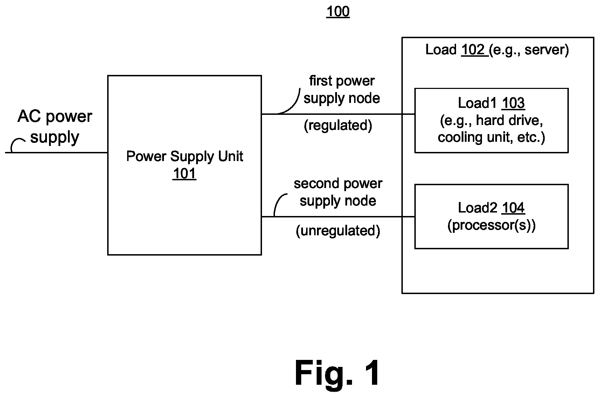

**Fig. 1** illustrates a high level system 100 with a PSU that provides regulated and unregulated power supplies, according to some embodiments of the disclosure. In some embodiments, system 100 comprises PSU 101, first power supply node, second power supply node, and Load 102. In some embodiments, PSU 101 receives AC or DC power supply and generates a regulated DC power supply on the first power supply node and an unregulated DC power supply on the second power supply node. In some embodiments, Load 102 is coupled to the first and second power supply nodes. In some embodiments, there may be more than one PSU 101 operating in parallel to supply to multiple parallel loads 102.

While various embodiments are described with reference to Load 102 being a server, Load 102 can be other loads such as a processor system (e.g., a Tablet, smart-device) having different types of loads. In some embodiments, Load1 103 is a load that requires or desires regulated power supply for optimum operation. Examples, of Load1 103 include cooling agent such as a fan, hard disk drive, etc. In some embodiments, the first power supply node is coupled to Load1 103. In some embodiments, the regulated power supply on the first power supply node is strictly regulated within a tight range (e.g., +/- 5%).

In some embodiments, Load2 104 is a load that may operate at a higher power supply level during a high power supply mode (e.g., Turbo mode). Examples, of Load2 103 include voltage regulators (VRs) and DC-DC converters to power central processing units (CPUs), System-on-Chip (SoC) processors, a plurality of processors coupled in a chain or ring, etc. In some embodiments, the second power supply node is coupled to Load2 104. In some embodiments, the unregulated power supply on the second power supply node is allowed to transiently droop much (because it is not regulated) when the high power mode is enabled.

In some embodiments, system 100 is a fully integrated system such that PSU 101 and Load 102 are on the same motherboard or die. In some embodiments, PSU 101 is separate from Load 102 in that PSU is a separate integrated circuit with its own package.

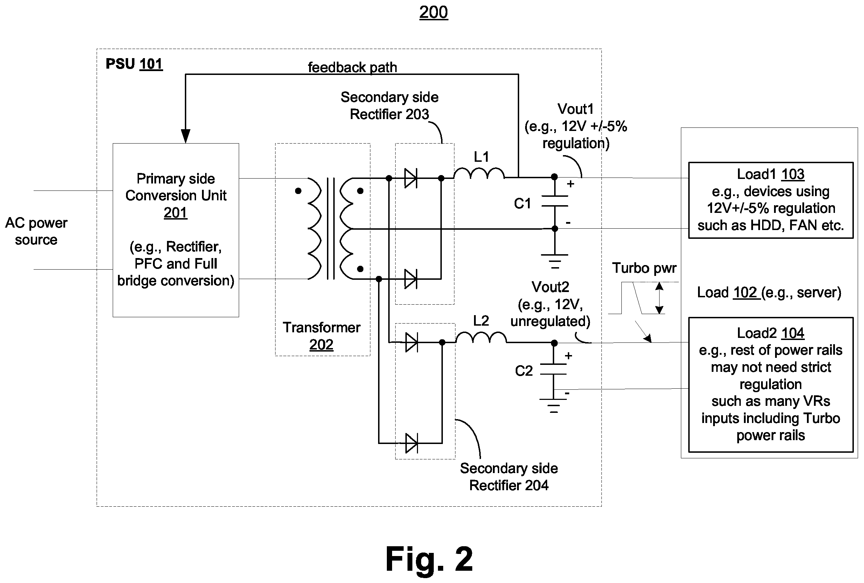

**Fig. 2** illustrates a detailed level architecture 200 of PSU 101 of **Fig. 1**, according to some embodiments of the disclosure. It is pointed out that those elements of **Fig. 2** having the same reference numbers (or names) as the elements of any other figure can operate or function in any manner similar to that described, but are not limited to such.

In some embodiments, PSU 101 comprises a Primary side Conversion Unit 201, Transformer 202, Secondary side Rectifiers 203 and 204, inductors L1 and L2, and output capacitors C1 and C2. In some embodiments, Primary side Conversion Unit 201 receives AC power supply from an AC or DC power supply source and generates a high frequency AC power supply. Primary side Conversion Unit 201 comprises a Rectifier, Phase Frequency Controller, Full bridge topology conversion circuit, etc. In some embodiments, the AC power supply from Primary side Conversion Unit 201 is received by the primary side turns (i.e., coils) of Transformer 202. In some embodiments, Transformer 202 steps down the AC power supply at the secondary turns of Transformer 202.

In some embodiments, the two rectifiers (203 and 204) are coupled to the secondary side of Transformer 202, such that the first rectifier (i.e., Secondary side Rectifier 203) is used to provide rectified voltage to the first inductor L1 while the second rectifier (i.e., Secondary side Rectifier 204) is used to provide rectified voltage to the second inductor L1. In some embodiments, Secondary side Rectifier 203 includes two rectifying circuits or devices (e.g., diodes) such that one of them is coupled to a first terminal of the secondary side turn of Transformer 202 and another one of them is coupled to a second terminal of the secondary side turn of Transformer 202.

In some embodiments, Secondary side Rectifier 204 includes two rectifying circuits or devices (e.g., diodes) such that one of them is coupled to the first terminal of the secondary side turn of Transformer 202 and another one of them is coupled to the second terminal of the secondary side turn of Transformer 202. In this embodiment, both Secondary side Rectifiers 203 and 204 share the same secondary side turn of Transformer 202. In some embodiments, Secondary side Rectifiers 203 and 204 are coupled to different secondary sides of Transformer 202, where the different secondary sides have a different number of coils.

In some embodiments, a first terminal of inductor L1 is coupled to Secondary side Rectifier 203 and a second terminal of inductor L1 is coupled to Vout1 (also referred here as the first power supply node). Here, labels for nodes and signals on those nodes are interchangeably used. For example, Vout1 may refer to Vout1 node or power supply Vout1 depending on the context of the sentence. In some embodiments, capacitor C1 is coupled to Vout1 and ground. In some embodiments, Vout1 provides a regulated power supply (also referred to as the first power supply) which is fed back (via feedback path) to Primary side Conversion Unit 201 to regulate the first power supply. In some embodiments, the first power supply (e.g., 12V) is tightly regulated (e.g., +/- 5%).

In some embodiments, a first terminal of inductor L2 is coupled to Secondary side Rectifier 204 and a second terminal of inductor L2 is coupled to Vout2 (also referred to as the second power supply node). In some embodiments, capacitor C2 is coupled to Vout2 and ground. In some embodiments, Vout2 provides an unregulated power supply (also referred to as the second power supply). In some embodiments, the second power supply is indirectly regulated (i.e., weakly regulated) because it is derived from the output of Primary side Conversion Unit 201 which regulates the first power supply. In some embodiments, no feedback path is provided between Vout2 and Primary side Conversion Unit 201, hence Vout2 power supply (e.g., 12V) is technically unregulated and may droop during transient load increases (e.g., may drop to 6V from 12V due to voltage droop at the beginning of Turbo mode).

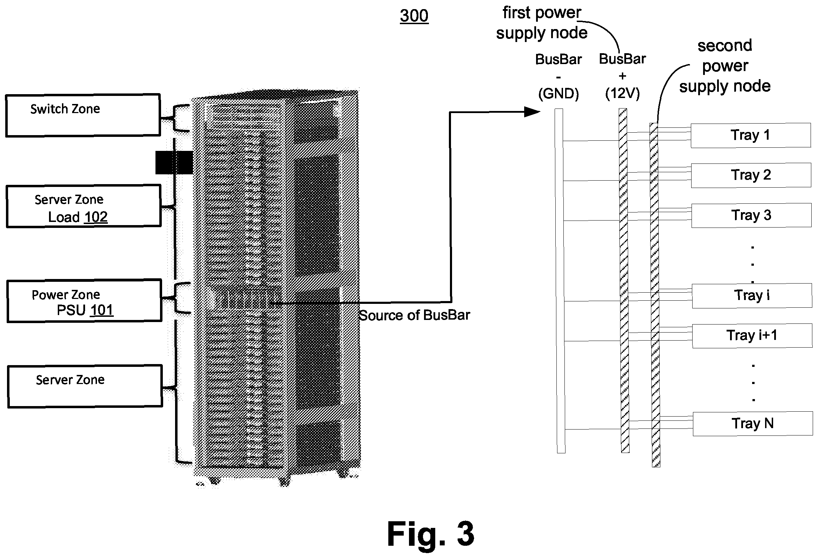

**Fig. 3** illustrates a server rack 300 with a plurality of servers and a power supply unit to provide regulated and unregulated power supplies, according to some embodiments of the disclosure. It is pointed out that those elements of **Fig. 3** having the same reference numbers (or names) as the elements of any other figure can operate or function in any manner similar to that described, but are not limited to such.

In some embodiments, server rack 300 includes a Power Zone having one or more power supply units such as PSU 101, Server Zones having a plurality of servers (i.e., Load 102), and Switch Zone having routers. In some embodiments, PSU 101 provides the first and second power supplies on two separate power nodes (or BusBars). These nodes (including ground (GND) node) provide first and second power supplies to each tray (i.e., Tray 1-N, where 'N' is an integer), where each tray includes a server having one or more processors. In some embodiments, during high power mode, the first power supply remains regulated while the second power supply may droop transiently.

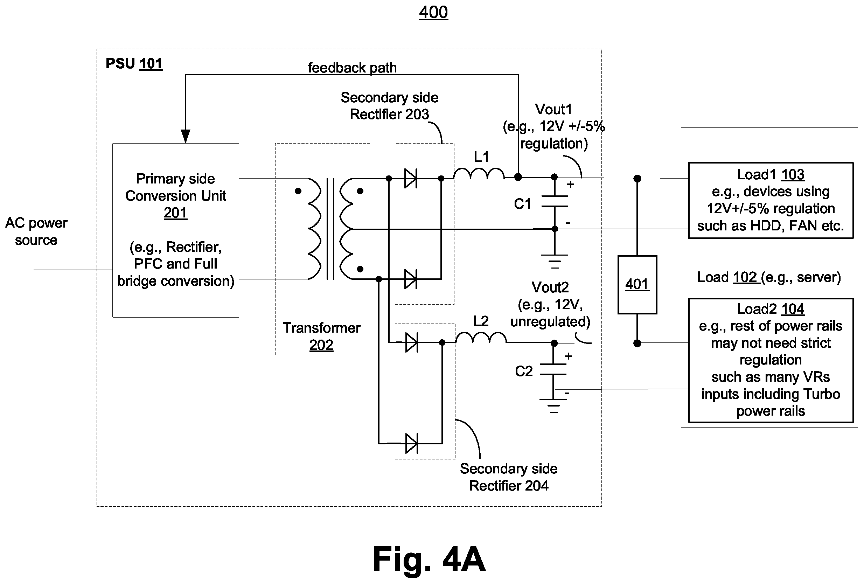

**Fig. 4A** illustrates a detailed level architecture 400 having PSU 101 of **Fig. 1** coupled to an energy transfer unit, according to some embodiments of the disclosure. It is pointed out that those elements of **Fig. 4A** having the same reference numbers (or names) as the elements of any other figure can operate or function in any manner similar to that described, but are not limited to such. So as not to obscure the embodiments of **Fig. 4A**, differences between **Fig. 2** and **Fig. 4A** are described.

In some embodiments, an energy transfer unit 401 is coupled to the first and second power supply nodes (i.e., Vout1 and Vout2). While the embodiments show energy transfer unit 401 residing outside of PSU 101, in some embodiments, energy transfer unit 401 is part of PSU 101. In some embodiments, energy transfer unit 401 is operable to provide a unidirectional energy transfer and low impedance path from Vout1 to Vout2. In some embodiments, a control signal (not shown) is received by energy transfer unit 401 to cause energy transfer unit 401 to start the operation of energy transfer.

One technical effect of energy transfer unit 401 is that it compensates the droop in the second power supply Vout2 during high power mode transient (i.e., energy is borrowed from Vout1 and provided to Vout2 to enhance power supply capability during high power mode). In some embodiments, the control signal triggers the energy transfer operation when the voltage level of Vout1 is above a threshold (e.g., above 3% of normal voltage level). During that time, energy transfers from the first power supply node (Vout1) to the second power supply node (Vout2). In some embodiments, the control signal causes energy transfer unit 401 to stop the process of energy transfer when the voltage level of Vout1 is below the same threshold or another threshold.

In some embodiments, the control signal is generated by a circuit which senses the voltage on the first power supply node. In some embodiments, the control signal is generated by a circuit which senses the current direction flowing through the second power supply node. The direction of current indicates whether current demand has suddenly increased, and so the circuit begins the process of energy transfer. In some embodiments, the circuit generating the control signal is part of PSU 101. In some embodiments, when the circuit detects that the current through the second power supply node is above its normal current value, it determines a high power mode.

When the high power mode is triggered, PSU 101 extends the switching duty cycle to transfer more energy from Primary side Conversion Unit 201 to Transformer 202, according to some embodiments. During that time, PSU 101 also causes energy transfer unit 401 to begin energy transfer from Vout1 to Vout2 to further assist the second power supply node (Vout2) to meet the higher power supply demand. In some embodiments, when the current through the second power supply node falls below its normal level, PSU 101 disables energy transfer unit 401.

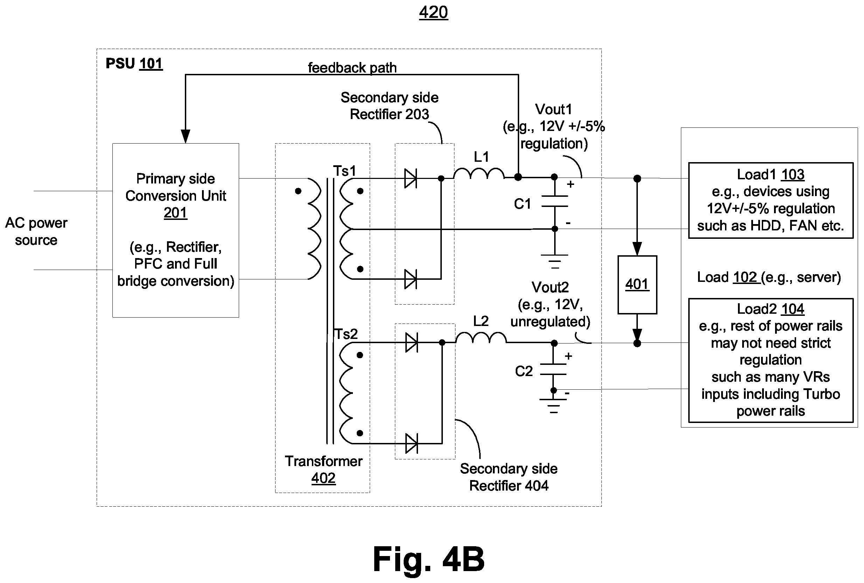

**Fig. 4B** illustrates a detailed level architecture 420 having the PSU 101 of **Fig. 1** coupled to an energy transfer unit, where transformer of PSU 101 includes two sets of secondary side turns, according to some embodiments of the disclosure. It is pointed out that those elements of **Fig. 4B** having the same reference numbers (or names) as the elements of any other figure can operate or function in any manner similar to that described, but are not limited to such. So as not to obscure the embodiments of **Fig. 4B**, differences between **Fig. 2** and **Fig. 4A** are described.

In some embodiments, different sets of turns are used for the secondary side of Transformer 402. In some embodiments, one set of turns (Ts1) for the secondary side is coupled to Secondary side Rectifier 203 and another set of turns (Ts2) for the secondary side is coupled to Secondary side Rectifier 404. Secondary side Rectifier 404 is similar to Secondary side Rectifier 204 except that its inputs are not coupled to Secondary side Rectifier 203 and instead are coupled to another set of secondary side turns of Transformer 402. One technical effect of using different sets of turns for the secondary side of Transformer 402 for the two rectifiers (203 and 404) is that more power can be provided to the second power supply Vout2 during high power mode.

In some embodiments, Ts2 has more turns than Ts1. By having more Ts2 turns than Ts1 turns, capacitor C2 can store more energy with higher output voltage on the second power supply node Vout2. In some embodiments, Secondary side Rectifiers 203 and 404 may be coupled to different sets of secondary turns in the absence of energy transfer unit 401. In some embodiments, Secondary side Rectifiers 203 and 404 may be coupled to different sets of turns along with energy transfer unit 401.

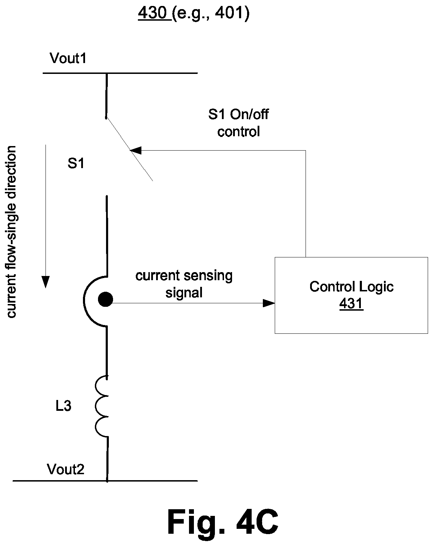

**Fig. 4C** illustrates an energy transfer unit 430 (e.g., 401), according to some embodiments of the disclosure. It is pointed out that those elements of **Fig. 4C** having the same reference numbers (or names) as the elements of any other figure can operate or function in any manner similar to that described, but are not limited to such.

In some embodiments, energy transfer unit 430 comprises switch S1, Control Logic 431, and inductor L3. In some embodiments, Control Logic 431 receives a current sensing signal indicating direction of current from the first power supply node (Vout1) to the second power supply node (Vout2), and generates an On/Off control signal to control turning on/off of switch S1. In some embodiments, when Load2 104 enters the high power mode, PSU 101 turns on switch S1 (e.g., by instructing Control Logic 431) to form an electrical path from the first power supply node to the second power supply node.

In some embodiments, inductor L3 is coupled to the switch S1 and the second power supply node Vout2. In some embodiments, inductance of inductor L3 is smaller than inductance of inductors L1 and L3. One purpose of having inductor L3 is to avoid too high of a peak in-rush current across the switch S1 under some conditions (e.g., when voltage difference between Vout2 and Vout1 is around 6V) to protect operation and integrity of the switch S1.

In some embodiments, when the switch S1 is turned on, Control Logic 431 monitors the direction of current flowing between nodes Vout1 and Vout2. In some embodiments, when Control Logic 431 detects a reversal of current direction, it causes the switch S1 to turn off (i.e., electrical path from Vout1 to Vout2 is disconnected).

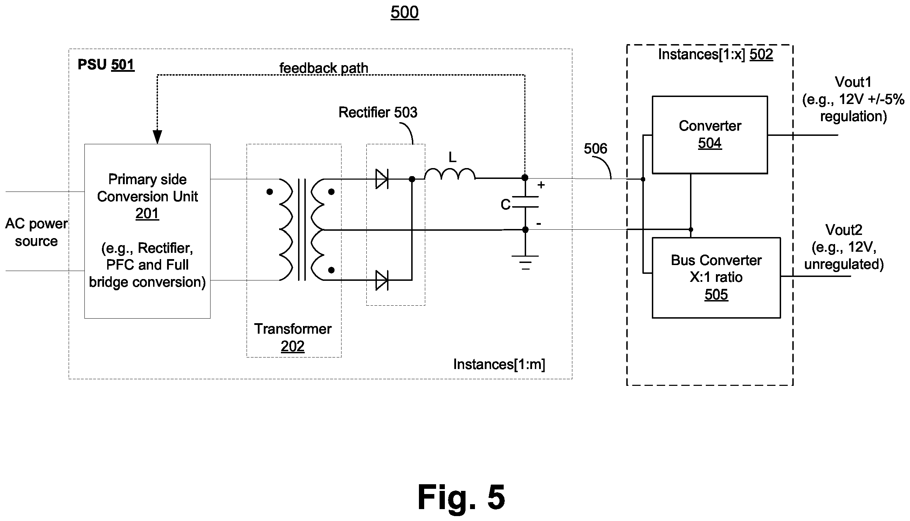

**Fig. 5** illustrates architecture 500 with PSU 501 having an intermediate unregulated or regulated voltage bus that is used for generating regulated and unregulated power supplies, according to some embodiments of the disclosure. It is pointed out that those elements of **Fig. 5** having the same reference numbers (or names) as the elements of any other figure can operate or function in any manner similar to that described, but are not limited to such. So as not to obscure the embodiments, difference between **Fig. 5** and **Fig. 2** are described.

In some embodiments, architecture 500 comprises 'm' instances of PSU 501, and 'x' instances of converters 502. In some embodiments, the total output power capacity of 'm' instances of PSU 501 should be high enough to supply total required power by 'x' instances of converters 502. In some embodiments, PSU 501 comprises Primary side Conversion Unit 201, Transformer 202, Rectifier 503, inductor L, and output capacitor C coupled together as shown. In some embodiments, output of PSU 501 is a single power rail (implemented as a bus), which is then used to provide two power rails to manage high power modes. This single power rail (i.e., bus) voltage on node 506 may be regulated or unregulated, serving as input power for converter 502.

In some embodiments, inductor L is coupled to Rectifier 503 and intermediate bus node 506. In large systems, it may be beneficial to distribute power on the intermediate bus 506 at a higher voltage (e.g., 48V) which may not be directly suitable voltage for direct conversion using buck converters to generate the final load voltage. In some embodiments, output voltage and current from intermediate bus 506 is provided to converters to generate regulated Vout1 (i.e., first power supply) and unregulated voltage Vout2 (i.e., second power supply).

In some embodiments, 'x' instances of converters comprise Converter 504 and Bus Converter (having X:1 Ratio) 505 as shown. In some embodiments, Converter 504 receives the intermediate power on the intermediate power bus 506 and generates a regulated Vout1. In some embodiments, Bus Converter 505 receives the intermediate power on the intermediate power bus 506 and generates an unregulated Vout2. In some embodiments, Bus Converter 505 is a DC-DC converter.

In some embodiments, the conversion by Bus Converter 505 is unregulated. For example, the output voltage Vout2 tracks the input voltage by a fixed ratio 'X' (e.g., 48V to 12V when 'X' is 4). As input voltage on the intermediate bus 506 varies, so does the output voltage Vout2. For loads that desire to have a regulated power supply, Converter 504 is used to provide regulated output voltage Vout1. In such embodiments, when the voltage on the intermediate bus 506 varies, output voltage Vout1 remains substantially unchanged (e.g., regulated within +/- 5% range). Architecture 500 provides a wide voltage range for Vout2 so that downstream loads coupled to Vout2 may operate on high power modes without causing droops to power supply Vout1 provided to other loads.

In some embodiments, Converter 504 is a Buck converter. In some embodiments, Converter 504 is a DC-DC converter with approximately X:1 ratio, but having a regulated output. In some embodiments, Converter 504 is Buck-Boost converter. In such embodiments, the output of Bus Converter 505 is provided as input to Converter 504 instead of input 506 to Converter 504.

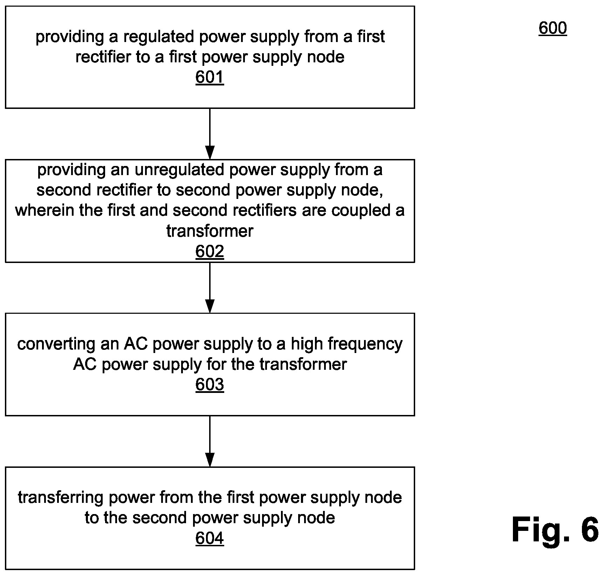

**Fig. 6** illustrates flowchart 600 for a method for providing regulated and unregulated power supplies, according to some embodiments of the disclosure. It is pointed out that those elements of **Fig. 6** having the same reference numbers (or names) as the elements of any other figure can operate or function in any manner similar to that described, but are not limited to such.

Although the blocks in the flowchart with reference to **Fig. 6** are shown in a particular order, the order of the actions can be modified. Thus, the illustrated embodiments can be performed in a different order, and some actions/blocks may be performed in parallel. Some of the blocks and/or operations listed in **Fig. 6** are optional in accordance with certain embodiments. The numbering of the blocks presented is for the sake of clarity and is not intended to prescribe an order of operations in which the various blocks must occur. Additionally, operations from the various flows may be utilized in a variety of combinations.

At block 601, regulated power supply Vout1 is provided from the first secondary side rectifier 203 to the first power supply node Vout1. At block 602, unregulated power supply Vout2 from the second secondary side rectifier 204 or 404 is provided to the second power supply node Vout2. The first and second secondary side rectifiers (203 and 204/404) are coupled to Transformer 202 as shown with reference to **Figs. 2** and **4****.** Referring back to **Fig. 6**, at block 603, AC power supply is converted by Primary side Conversion Unit 201 to a high frequency AC power supply for Transformer 202. At block 604, energy transfer unit 401 may transfer power from the first power supply node Vout1 to the second power supply node Vout2 when Load2 coupled to Vout2 104 enters a high power mode.

Program software code/instructions associated with flowchart 600 and executed to implement embodiments of the disclosed subject matter may be implemented as part of an operating system or a specific application, component, program, object, module, routine, or other sequence of instructions or organization of sequences of instructions referred to as "program software code/instructions," "operating system program software code/instructions," "application program software code/instructions," or simply "software" or firmware embedded in processor. In some embodiments, the program software code/instructions associated with flowchart 600 are executed by a controller of the PSU 101.

In some embodiments, the program software code/instructions associated with flowchart 600 are stored in a computer executable storage medium and executed by a controller of PSU 101. Here, computer executable storage medium is a tangible machine readable medium that can be used to store program software code/instructions and data that, when executed by a computing device, cause a processor (e.g., controller of PCU 101) to perform a method(s) as may be recited in one or more accompanying claims directed to the disclosed subject matter.

The tangible machine readable medium may include storage of the executable software program code/instructions and data in various tangible locations, including for example ROM, volatile RAM, non-volatile memory and/or cache and/or other tangible memory as referenced in the present application. Portions of this program software code/instructions and/or data may be stored in any one of these storage and memory devices. Further, the program software code/instructions can be obtained from other storage, including, e.g., through centralized servers or peer to peer networks and the like, including the Internet. Different portions of the software program code/instructions and data can be obtained at different times and in different communication sessions or in a same communication session.

The software program code/instructions (associated with flowchart 600) and data can be obtained in their entirety prior to the execution of a respective software program or application by the computing device. Alternatively, portions of the software program code/instructions and data can be obtained dynamically, e.g., just in time, when needed for execution. Alternatively, some combination of these ways of obtaining the software program code/instructions and data may occur, e.g., for different applications, components, programs, objects, modules, routines or other sequences of instructions or organization of sequences of instructions, by way of example. Thus, it is not required that the data and instructions be on a tangible machine readable medium in entirety at a particular instance of time.

Examples of tangible computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., Compact Disk Read-Only Memory (CD ROMS), Digital Versatile Disks (DVDs), etc.), among others. The software program code/instructions may be temporarily stored in digital tangible communication links while implementing electrical, optical, acoustical or other forms of propagating signals, such as carrier waves, infrared signals, digital signals, etc. through such tangible communication links.

In general, a tangible machine readable medium includes any tangible mechanism that provides (i.e., stores and/or transmits in digital form, e.g., data packets) information in a form accessible by a machine (i.e., a computing device), which may be included, e.g., in a communication device, a computing device, a network device, a personal digital assistant, a manufacturing tool, a mobile communication device, whether or not able to download and run applications and subsidized applications from the communication network, such as the Internet, e.g., an iPhone®, Blackberry® Droid®, or the like, or any other device including a computing device. In one embodiment, processor-based system is in a form of or included within a PDA, a cellular phone, a notebook computer, a tablet, a game console, a set top box, an embedded system, a TV, a personal desktop computer, etc. Alternatively, the traditional communication applications and subsidized application(s) may be used in some embodiments of the disclosed subject matter.

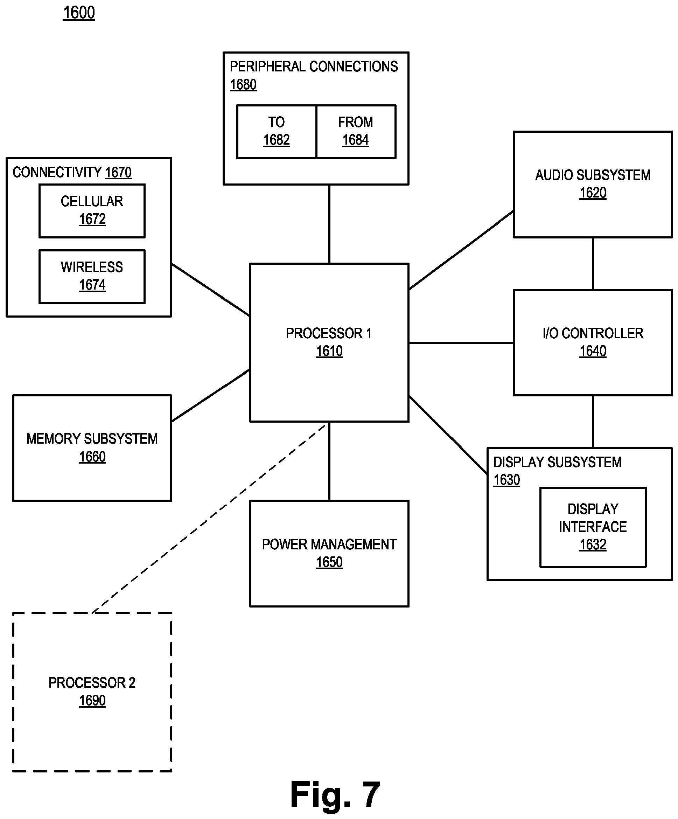

**Fig. 7** illustrates a smart device or a computer system or a SoC (System-on-Chip) having a PSU that provides regulated and unregulated power supplies, according to some embodiments of the disclosure. It is pointed out that those elements of **Fig. 7** having the same reference numbers (or names) as the elements of any other figure can operate or function in any manner similar to that described, but are not limited to such.

**Fig. 7** illustrates a block diagram of an embodiment of a mobile device in which flat surface interface connectors could be used. In one embodiment, computing device 1600 represents a mobile computing device, such as a computing tablet, a mobile phone or smart-phone, a wireless-enabled e-reader, or other wireless mobile device. It will be understood that certain components are shown generally, and not all components of such a device are shown in computing device 1600.

In one embodiment, computing device 1600 includes a first processor 1610 having a PSU (e.g., PSU 101, PSU 501) that provides or causes to provide regulated and unregulated power supplies, according to some embodiments discussed. Other blocks of the computing device 1600 may also have a PSU (e.g., PSU 101, PSU 501) that provides or causes to provide regulated and unregulated power supplies, according to some embodiments. The various embodiments of the present disclosure may also comprise a network interface within 1670 such as a wireless interface so that a system embodiment may be incorporated into a wireless device, for example, cell phone or personal digital assistant.

In one embodiment, processor 1610 (and/or processor 1690) can include one or more physical devices, such as microprocessors, application processors, microcontrollers, programmable logic devices, or other processing means. The processing operations performed by processor 1610 include the execution of an operating platform or operating system on which applications and/or device functions are executed. The processing operations include operations related to I/O (input/output) with a human user or with other devices, operations related to power management, and/or operations related to connecting the computing device 1600 to another device. The processing operations may also include operations related to audio I/O and/or display I/O.

In one embodiment, computing device 1600 includes audio subsystem 1620, which represents hardware (e.g., audio hardware and audio circuits) and software (e.g., drivers, codecs) components associated with providing audio functions to the computing device. Audio functions can include speaker and/or headphone output, as well as microphone input. Devices for such functions can be integrated into computing device 1600, or connected to the computing device 1600. In one embodiment, a user interacts with the computing device 1600 by providing audio commands that are received and processed by processor 1610.

Display subsystem 1630 represents hardware (e.g., display devices) and software (e.g., drivers) components that provide a visual and/or tactile display for a user to interact with the computing device 1600. Display subsystem 1630 includes display interface 1632, which includes the particular screen or hardware device used to provide a display to a user. In one embodiment, display interface 1632 includes logic separate from processor 1610 to perform at least some processing related to the display. In one embodiment, display subsystem 1630 includes a touch screen (or touch pad) device that provides both output and input to a user.

I/O controller 1640 represents hardware devices and software components related to interaction with a user. I/O controller 1640 is operable to manage hardware that is part of audio subsystem 1620 and/or display subsystem 1630. Additionally, I/O controller 1640 illustrates a connection point for additional devices that connect to computing device 1600 through which a user might interact with the system. For example, devices that can be attached to the computing device 1600 might include microphone devices, speaker or stereo systems, video systems or other display devices, keyboard or keypad devices, or other I/O devices for use with specific applications such as card readers or other devices.

As mentioned above, I/O controller 1640 can interact with audio subsystem 1620 and/or display subsystem 1630. For example, input through a microphone or other audio device can provide input or commands for one or more applications or functions of the computing device 1600. Additionally, audio output can be provided instead of, or in addition to display output. In another example, if display subsystem 1630 includes a touch screen, the display device also acts as an input device, which can be at least partially managed by I/O controller 1640. There can also be additional buttons or switches on the computing device 1600 to provide I/O functions managed by I/O controller 1640.

In one embodiment, I/O controller 1640 manages devices such as accelerometers, cameras, light sensors or other environmental sensors, or other hardware that can be included in the computing device 1600. The input can be part of direct user interaction, as well as providing environmental input to the system to influence its operations (such as filtering for noise, adjusting displays for brightness detection, applying a flash for a camera, or other features).

In one embodiment, computing device 1600 includes power management 1650 that manages battery power usage, charging of the battery, and features related to power saving operation. Memory subsystem 1660 includes memory devices for storing information in computing device 1600. Memory can include nonvolatile (state does not change if power to the memory device is interrupted) and/or volatile (state is indeterminate if power to the memory device is interrupted) memory devices. Memory subsystem 1660 can store application data, user data, music, photos, documents, or other data, as well as system data (whether long-term or temporary) related to the execution of the applications and functions of the computing device 1600.

Elements of embodiments are also provided as a machine-readable medium (e.g., memory 1660) for storing the computer-executable instructions (e.g., instructions to implement any other processes discussed herein). The machine-readable medium (e.g., memory 1660) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

Connectivity 1670 includes hardware devices (e.g., wireless and/or wired connectors and communication hardware) and software components (e.g., drivers, protocol stacks) to enable the computing device 1600 to communicate with external devices. The computing device 1600 could be separate devices, such as other computing devices, wireless access points or base stations, as well as peripherals such as headsets, printers, or other devices.

Connectivity 1670 can include multiple different types of connectivity. To generalize, the computing device 1600 is illustrated with cellular connectivity 1672 and wireless connectivity 1674. Cellular connectivity 1672 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, or other cellular service standards. Wireless connectivity (or wireless interface) 1674 refers to wireless connectivity that is not cellular, and can include personal area networks (such as Bluetooth, Near Field, etc.), local area networks (such as Wi-Fi), and/or wide area networks (such as WiMax), or other wireless communication.

Peripheral connections 1680 include hardware interfaces and connectors, as well as software components (e.g., drivers, protocol stacks) to make peripheral connections. It will be understood that the computing device 1600 could both be a peripheral device ("to" 1682) to other computing devices, as well as have peripheral devices ("from" 1684) connected to it. The computing device 1600 commonly has a "docking" connector to connect to other computing devices for purposes such as managing (e.g., downloading and/or uploading, changing, synchronizing) content on computing device 1600. Additionally, a docking connector can allow computing device 1600 to connect to certain peripherals that allow the computing device 1600 to control content output, for example, to audiovisual or other systems.

In addition to a proprietary docking connector or other proprietary connection hardware, the computing device 1600 can make peripheral connections 1680 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. For example, other memory architectures e.g., Dynamic RAM (DRAM) may use the embodiments discussed. The embodiments of the disclosure are intended to embrace all such alternatives, modifications, and variations as to fall within the broad scope of the appended claims.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

The following examples pertain to further embodiments. Specifics in the examples may be used anywhere in one or more embodiments. All optional features of the apparatus described herein may also be implemented with respect to a method or process.

For example, an apparatus is provided which comprises: a transformer; a first rectifier; and a second rectifier, wherein the first rectifier is coupled to the transformer, such that the first rectifier to provide a regulated power supply to a first power supply node and the second rectifier to provide an un-regulated power supply to a second power supply node.

In some embodiments, the apparatus comprises a conversion unit coupled to the transformer. In some embodiments, the conversion unit includes: one or more inputs for coupling to an AC or DC power source; and one or more outputs for coupled to the transformer. In some embodiments, the apparatus comprises: a first inductor coupled in series with the first rectifier and the first power supply node; and a first capacitor coupled to the first power supply node and ground. In some embodiments, the apparatus comprises: a second inductor coupled in series with the second rectifier and the second power supply node; and a second capacitor coupled to the second power supply node and ground.

In some embodiments, the apparatus comprises: an energy transfer unit coupled to the first and second power supply nodes. In some embodiments, the energy transfer unit is unidirectional and operable to transfer energy from the first power supply node to the second power supply node. In some embodiments, the apparatus comprises one or more current sensors coupled to the first and second nodes to sense currents flowing through the first and second power nodes, and to control the energy transfer unit. In some embodiments the transformer has two sets of secondary side turns such that a first set of secondary side turns is coupled to the first rectifier and a second set of secondary side turns is coupled to the second rectifier. In some embodiments, a ratio of turns of the first set of secondary side turns to primary side turns of the transformer is different than a ratio of turns of the second set of secondary side turns to the primary side turns.

In another example, a method is provided which comprises: providing a regulated power supply from a first rectifier to a first power supply node; and providing an unregulated power supply from a second rectifier to second power supply node, wherein the first and second rectifiers are coupled a transformer. In some embodiments, the method comprises converting an AC or DC power supply to a high frequency AC power supply for the transformer. In some embodiments, the method comprises providing feedback from the first power supply node to a conversion unit. In some embodiments, the method comprises transferring power from the first power supply node to the second power supply node. In some embodiments, the method comprises sensing currents, flowing through the first and second power supply nodes, to determine when to transfer power from the first power supply node to the second power supply node.

In another example, a system is provided which comprises: a memory having a first power supply node; a processor coupled to the memory, the processor having a second power supply node; a power supply unit an apparatus according to the apparatus described above; and a wireless interface for allowing the processor to communicate with another device. In some embodiments, the processor includes one or more voltage regulators to receive the unregulated power supply and to generate regulated power supplies for various loads of the processor. In some embodiments, the system further comprises a cooling unit coupled to the first power supply node.

In some embodiments, an apparatus is provided which comprises: means for providing a regulated power supply from a first rectifier to a first power supply node; and means for providing an unregulated power supply from a second rectifier to second power supply node, wherein the first and second rectifiers are coupled a transformer. In some embodiments, the apparatus comprises means for converting an AC or DC power supply to a high frequency AC power supply for the transformer. In some embodiments, the apparatus comprises means for providing feedback from the first power supply node to a conversion unit. In some embodiments, the apparatus comprises means for transferring power from the first power supply node to the second power supply node. In some embodiments, the apparatus comprises means for sensing currents, flowing through the first and second power supply nodes, to determine when to transfer power from the first power supply node to the second power supply node.

In another example, a system is provided which comprises: a memory having a first power supply node; a processor coupled to the memory, the processor having a second power supply node; a power supply unit comprising an apparatus according to the apparatus described above; and a wireless interface for allowing the processor to communicate with another device. In some embodiments, the system comprises a display interface for allowing a display unit to display content processed by the processor.

An abstract is provided that will allow the reader to ascertain the nature and scope of the technical disclosure. The abstract is submitted with the understanding that it will not be used to limit the scope or meaning of the claims. The following claims are hereby incorporated into the detailed description, with each claim standing on its own as a separate embodiment.

## Claims

1. An apparatus comprising:
a transformer (202);
a first rectifier (203) coupled to the transformer and configured to provide a regulated power supply to a first power supply node (Vout1);
a second rectifier (204) coupled to the transformer and configured to provide an un-regulated power supply to a second power supply node (Vout2);
the apparatus being further **characterized by** comprising:
an energy transfer unit (401) coupled to the first and second power supply nodes and operable to transfer energy from the first power supply node to the second power supply node in response to a control signal; and
a control circuit comprising control logic (431) configured to monitor a direction of current flowing between the first and second power supply nodes, wherein the control circuit is further configured to generate the control signal to cause the energy transfer unit to transfer energy from the first power supply node to the second power supply node in response to determining that a voltage at the first power supply node is above a threshold voltage when the second power supply node is in a high power mode, and generate the control signal to stop the energy transfer unit from transferring energy when the control logic detects a reversal of current direction,
wherein the high-power mode is detected, by the control circuit, based on an above normal current value.

2. The apparatus of claim 1 comprising a conversion unit (201) coupled to the transformer.

3. The apparatus of claim 2, wherein the conversion unit includes:
one or more inputs for coupling to an AC or DC power source; and
one or more outputs for coupling to the transformer.

4. The apparatus of claim 1 comprising:
a first inductor (L1) coupled in series with the first rectifier and the first power supply node; and
a first capacitor (C1) coupled to the first power supply node and ground.

5. The apparatus of claim 4 comprising:
a second inductor (L2) coupled in series with the second rectifier and the second power supply node; and
a second capacitor (C2) coupled to the second power supply node and ground.

6. The apparatus of claim 1 comprising one or more current sensors coupled to the first and second power supply nodes to sense currents flowing through the first and second power supply nodes, and to control the energy transfer unit.

7. The apparatus of claim 1, wherein the transformer has two sets of secondary side turns such that a first set of secondary side turns is coupled to the first rectifier and a second set of secondary side turns is coupled to the second rectifier.

8. The apparatus of claim 7, wherein a ratio of turns of the first set of secondary side turns to primary side turns of the transformer is different than a ratio of turns of the second set of secondary side turns to the primary side turns.

9. A method comprising:
providing a regulated power supply from a first rectifier (203) to a first power supply node (Vout1); and
providing an unregulated power supply from a second rectifier (204) to second power supply node (Vout2), wherein the first and second rectifiers are coupled to a transformer (202);
the method being further **characterized by**:
transferring power from the first power supply node to the second power supply node in response to the second power supply node being in a high power mode and determining that a voltage at the first power supply node is above a threshold voltage, wherein the high-power mode is detected, by the control circuit, based on an above normal current value;
monitoring a direction of current flowing between the first and second power supply nodes;
stopping the transfer of power from the first power supply node to the second power supply node in response to the reversal of current between the first and second power supply nodes.

10. The method of claim 9 further comprising:
converting an AC or DC power supply to a high frequency AC power supply for the transformer; and
providing feedback from the first power supply node to a conversion unit.

11. The method of claim 9 further comprising:
sensing currents, flowing through the first and second power supply nodes, to determine when to transfer power from the first power supply node to the second power supply node.

12. A system comprising:
a memory (1660) having a first power supply node;
a processor (1610) coupled to the memory, the processor having a second power supply node;
a power supply unit (101) comprising an apparatus according to any one of apparatus claims 1 to 8; and:
a wireless interface for allowing the processor to communicate with another device.

13. The system of claim 9 further comprising a cooling unit coupled to the first power supply node.

## Patentansprüche

1. Einrichtung, die Folgendes umfasst:
einen Transformator (202);
einen ersten Gleichrichter (203), der mit dem Transformator gekoppelt und dazu ausgelegt ist, einem ersten Stromversorgungsknoten (Vout1) eine geregelte Stromversorgung zuzuführen;
einen zweiten Gleichrichter (204), der mit dem Transformator gekoppelt und dazu ausgelegt ist, einem zweiten Stromversorgungsknoten (Vout2) eine ungeregelte Stromversorgung zuzuführen;
wobei die Einrichtung ferner **dadurch gekennzeichnet ist, dass** sie Folgendes umfasst:
eine Energieübertragungseinheit (401), die mit dem ersten und zweiten Stromversorgungsknoten gekoppelt und dahingehend betreibbar ist, als Reaktion auf ein Steuersignal Energie von dem ersten Stromversorgungsknoten zu dem zweiten Stromversorgungsknoten zu übertragen; und
eine Steuerschaltung, umfassend Steuerlogik (431), die dazu ausgelegt ist, eine Richtung von zwischen dem ersten und dem zweiten Stromversorgungsknoten fließendem Strom zu überwachen, wobei die Steuerschaltung ferner ausgelegt ist zum Erzeugen des Steuersignals zum Veranlassen der Energieübertragungseinheit, Energie von dem ersten Stromversorgungsknoten zu dem zweiten Stromversorgungsknoten zu übertragen, als Reaktion auf Bestimmen, dass eine Spannung an dem ersten Stromversorgungsknoten über einer Schwellenspannung liegt, wenn sich der zweite Stromversorgungsknoten in einem Hochleistungsmodus befindet, und Erzeugen des Steuersignals zum Stoppen des Übertragens von Energie durch die Energieübertragungseinheit, wenn die Steuerlogik eine Umkehr einer Stromrichtung detektiert,
wobei der Hochleistungsmodus durch die Steuerschaltung basierend auf einem über einem Normalwert liegenden Stromwert detektiert wird.

2. Einrichtung nach Anspruch 1, die eine mit dem Transformator gekoppelte Umwandlungseinheit (201) umfasst.

3. Einrichtung nach Anspruch 2, wobei die Umwandlungseinheit Folgendes beinhaltet:
einen oder mehrere Eingänge zum Koppeln mit einer Wechsel- oder Gleichstromstromquelle; und
einen oder mehrere Ausgänge zum Koppeln mit dem Transformator.

4. Einrichtung nach Anspruch 1, die Folgendes umfasst:
eine erste Induktivität (L1), die mit dem ersten Gleichrichter und dem ersten Stromversorgungsknoten in Reihe geschaltet ist; und
einen ersten Kondensator (C1), der mit dem ersten Stromversorgungsknoten und Masse gekoppelt ist.

5. Einrichtung nach Anspruch 4, die Folgendes umfasst:
eine zweite Induktivität (L2), die mit dem zweiten Gleichrichter und dem zweiten Stromversorgungsknoten in Reihe geschaltet ist; und
einen zweiten Kondensator (C2), der mit dem zweiten Stromversorgungsknoten und Masse gekoppelt ist.

6. Einrichtung nach Anspruch 1, die einen oder mehrere mit dem ersten und zweiten Knoten gekoppelte Stromsensoren umfasst, um durch den ersten und zweiten Stromversorgungsknoten fließende Ströme zu erfassen, und um die Energieübertragungseinheit zu steuern.

7. Einrichtung nach Anspruch 1, wobei der Transformator zwei Sätze sekundärseitiger Windungen derart aufweist, dass ein erster Satz sekundärseitiger Windungen mit dem ersten Gleichrichter gekoppelt ist und ein zweiter Satz sekundärseitiger Windungen mit dem zweiten Gleichrichter gekoppelt ist.

8. Einrichtung nach Anspruch 7, wobei sich ein Verhältnis von Windungen des ersten Satzes sekundärseitiger Windungen zu primärseitigen Windungen des Transformators von einem Verhältnis von Windungen des zweiten Satzes sekundärseitiger Windungen zu den primärseitigen Windungen unterscheidet.

9. Verfahren, das Folgendes umfasst:
Zuführen einer geregelten Stromversorgung von einem ersten Gleichrichter (203) zu einem ersten Stromversorgungsknoten (Vout1); und
Zuführen einer ungeregelten Stromversorgung von einem zweiten Gleichrichter (204) zu einem zweiten Stromversorgungsknoten (Vout2), wobei der erste und zweite Gleichrichter mit einem Transformator (202) gekoppelt sind;
wobei das Verfahren ferner durch Folgendes gekennzeichnet ist:
Übertragen von Leistung von dem ersten Stromversorgungsknoten zu dem zweiten Stromversorgungsknoten als Reaktion darauf, dass sich der zweite Stromversorgungsknoten in einem Hochleistungsmodus befindet, und Bestimmen, dass eine Spannung an dem ersten Stromversorgungsknoten über einer Schwellenspannung liegt, wobei der Hochleistungsmodus durch die Steuerschaltung basierend auf einem über einem Normalwert liegenden Stromwert detektiert wird;
Überwachen einer Richtung eines zwischen dem ersten und zweiten Stromversorgungsknoten fließenden Stroms;
Stoppen der Übertragung von Leistung von dem ersten Stromversorgungsknoten zu dem zweiten Stromversorgungsknoten als Reaktion auf die Umkehr eines Stroms zwischen dem ersten und zweiten Stromversorgungsknoten.

10. Verfahren nach Anspruch 9, das ferner Folgendes umfasst:
Umwandeln einer Wechsel- oder Gleichstromstromversorgung in eine Hochfrequenz-Wechselstromversorgung für den Transformator; und
Zuführen einer Rückkopplung von dem ersten Stromversorgungsknoten zu einer Umwandlungseinheit.

11. Verfahren nach Anspruch 9, das ferner Folgendes umfasst:
Erfassen von durch den ersten und zweiten Stromversorgungsknoten fließenden Strömen, um zu bestimmen, wann Strom von dem ersten Stromversorgungsknoten zu dem zweiten Stromversorgungsknoten zu übertragen ist.

12. System, das Folgendes umfasst:
einen Speicher (1660), der einen ersten Stromversorgungsknoten aufweist;
einen Prozessor (1610), der mit dem Speicher gekoppelt ist, wobei der Prozessor einen zweiten Stromversorgungsknoten aufweist;
eine Stromversorgungseinheit (101), die eine Einrichtung nach einem der Einrichtungsansprüche 1 bis 8 aufweist; und
eine Drahtlosschnittstelle, um es dem Prozessor zu ermöglichen, mit einer anderen Vorrichtung zu kommunizieren.

13. System nach Anspruch 9, das ferner eine Kühleinheit umfasst, die mit dem ersten Stromversorgungsknoten gekoppelt ist.

## Revendications

1. Appareil comprenant :
un transformateur (202) ;
un premier redresseur (203) couplé au transformateur et conçu pour fournir une alimentation électrique régulée à un premier nœud d'alimentation (Vout1) ;
un second redresseur (204) couplé au transformateur et conçu pour fournir une alimentation électrique non régulée à un second nœud d'alimentation (Vout2) ;
l'appareil étant en outre **caractérisé en ce qu'**il comporte :
une unité de transfert d'énergie (401) couplée aux premier et second nœuds d'alimentation et exploitable pour transférer une énergie depuis le premier nœud d'alimentation vers le second nœud d'alimentation en réponse à un signal de commande ; et
un circuit de commande comprenant une logique de commande (431) configurée pour surveiller une direction d'un courant circulant entre les premier et second nœuds d'alimentation, dans lequel le circuit de commande est en outre configuré pour générer le signal de commande pour amener l'unité de transfert d'énergie à transférer de l'énergie depuis le premier nœud d'alimentation vers le second nœud d'alimentation en réponse à une détermination établissant qu'une tension au niveau du premier nœud d'alimentation est supérieure à une tension seuil lorsque le second nœud d'alimentation est dans un mode de puissance élevée, et générer le signal de commande pour empêcher l'unité de transfert d'énergie de transférer de l'énergie lorsque la logique de commande détecte une inversion du sens du courant,
dans lequel le mode de puissance élevée est détecté, par le circuit de commande, sur la base d'une valeur de courant supérieure à la normale.

2. Appareil selon la revendication 1, comprenant une unité de conversion (201) couplée au transformateur.

3. Appareil selon la revendication 2, dans lequel l'unité de conversion comprend :
une ou plusieurs entrées pour un couplage à une source de courant alternatif ou continu ; et
une ou plusieurs sorties pour un couplage au transformateur.

4. Appareil selon la revendication 1, comprenant :
une première bobine d'inductance (L1) couplée en série avec le premier redresseur et le premier nœud d'alimentation ; et
un premier condensateur (C1) couplé au premier nœud d'alimentation et à la terre.

5. Appareil selon la revendication 4, comprenant :
une seconde bobine d'inductance (L2) couplée en série avec le second redresseur et le second nœud d'alimentation ; et
un second condensateur (C2) couplé au second nœud d'alimentation et à la terre.

6. Appareil selon la revendication 1 comprenant un ou plusieurs capteurs de courant couplés aux premier et second nœuds pour détecter des courants circulant par les premier et second nœuds d'alimentation, et pour commander l'unité de transfert d'énergie.

7. Appareil selon la revendication 1, dans lequel le transformateur possède deux ensembles de spires latérales secondaires de sorte qu'un premier ensemble de spires latérales secondaires soit couplé au premier redresseur et qu'un second ensemble de spires latérales secondaires soit couplé au second redresseur.

8. Appareil selon la revendication 7, dans lequel un rapport de spires du premier ensemble de spires latérales secondaires aux spires latérales primaires du transformateur est différent d'un rapport de spires du second ensemble de spires latérales secondaires aux spires latérales primaires.

9. Procédé consistant à :
fournir une alimentation électrique régulée depuis un premier redresseur (203) vers un premier nœud d'alimentation (Vout1) ; et
fournir une alimentation électrique non régulée depuis un second redresseur (204) vers un second nœud d'alimentation (Vout2), dans lequel les premier et second redresseurs sont couplés à un transformateur (202) ;
le procédé étant en outre **caractérisé en ce qu'**il consiste à :
transférer de l'énergie depuis le premier nœud d'alimentation vers le second nœud d'alimentation en réponse au fait que le second nœud d'alimentation est dans un mode de puissance élevée, et déterminer qu'une tension au premier nœud d'alimentation est supérieure à une tension seuil, dans lequel le mode de puissance élevée est détecté, par le circuit de commande, sur la base d'une valeur de courant supérieure à la normale ;
surveiller une direction d'un courant circulant entre les premier et second nœuds d'alimentation ;
arrêter le transfert de puissance depuis le premier nœud d'alimentation vers le second nœud d'alimentation en réponse à l'inversion de courant entre les premier et second nœuds d'alimentation.

10. Procédé selon la revendication 9 consistant en outre à :
convertir une alimentation en courant alternatif ou continu en une alimentation en courant alternatif à haute fréquence pour le transformateur ; et
fournir une rétroaction depuis le premier nœud d'alimentation vers une unité de conversion.

11. Procédé selon la revendication 9 consistant en outre à :
détecter des courants, circulant par les premier et second nœuds d'alimentation, pour déterminer à quel moment transférer l'énergie depuis le premier nœud d'alimentation vers le second nœud d'alimentation.

12. Système comprenant :
une mémoire (1660) ayant un premier nœud d'alimentation ;
un processeur (1610) couplé à la mémoire, le processeur ayant un second nœud d'alimentation ;
une unité d'alimentation électrique (101) comprenant un appareil selon l'une quelconque des revendications 1 et 8 de l'appareil; et :
une interface sans fil permettant que le processeur communique avec un autre dispositif.

13. Système selon la revendication 9, comprenant en outre une unité de refroidissement couplée au premier nœud d'alimentation.
